# EUROPÄISCHE PATENTANMELDUNG

(11) **EP 0 551 577 A1**
(43) Veröffentlichungstag der Anmeldung: **21.07.1993**
(21) Anmeldenummer: 92118422.2
(22) Anmeldetag: 28.10.1992
(51) Int. Cl.: C04B 38/06, C04B 18/24

(54) **Porosierter Ziegel sowie Verfahren zu seiner Herstellung**

(30) Priorität: 16.01.1992 DE 4200981
(71) Anmelder: Gumbmann, Andreas, Dipl.-Ing., D-91074 Herzogenaurach (DE)
(72) Erfinder: Gumbmann, Andreas, Dipl.-Ing., D-91074 Herzogenaurach (DE)
(74) Vertreter: Patentanwälte Dr. Solf & Zapf

(57) **Zusammenfassung**

Die Erfindung betrifft einen porosierten Ziegel aus gebranntem Ton, wobei der Ziegel gekennzeichnet ist durch eine durch Ausbrennen von Papierfasern aus zermahlenem Papier hergestellte, verfilzte Mikroporenstruktur und eine Porosität von 13 bis 40, insbesondere von 20 bis 30 Vol.-% sowie durch eine Rohdichte von 1200 bis 1700, insbesondere von 1250 bis 1500 kg/m³.

## Beschreibung

Die Erfindung betrifft einen mit Mikroporen porosierten Ziegel sowie ein verfahren zu seiner Herstellung.

Ziegel werden aus aufbereitetem Ton gebrannt, wobei Ton mit Wasser gemischt und daraus ein Tonstrang gepreßt wird. Aus dem Tonstrang werden Ziegelrohlinge geschnitten, die getrocknet und anschließend bei etwa 800 bis 1000°C gebrannt werden. Das Endprodukt ist der Ziegel.

Gebrannte Ziegel weisen eine Porosität auf, die im wesentlichen aus Mikroporen und gröberen Poren besteht. Die groben Poren resultieren z.B. aus dem Raum zwischen größeren Körnern oder Lufteinschlüssen, während die Mikroporen durch Entgasungen und Verdampfung von Wasser an den Stellen entstehen, an denen sich entgasende Stoffe oder Wasser befanden oder an den Stellen, an denen sich die Gase oder der Wasserdampf ihren Weg nach außen gebahnt haben.

Insbesondere zur Erhöhung der Wärme- und Schalldämmung sowie zur besseren Handhabbarkeit großformatiger Ziegel werden Ziegel zusätzlich porosiert. Porosierungsmittel sind billige, der Ziegelrohmasse beigemischte organische Ausbrennstoffe, wie Sägemehl, gemahlene Kohle, Brennstoffabfälle, geschäumte Polystyrolpartikel oder dergleichen. Mit diesen Mitteln gelingt es, die Porosität z.B. um 25% bis 35% bis 65% zu erhöhen. Durch diese Porosität, bei der relativ grobe Poren erzeugt werden, wird meist die Festigkeit erheblich gemindert und dadurch auch der Schallschutz negativ beeinflußt. Es können auch bei steifen Porosierungsmittel, wie z.B. geblähtem Lavastein, Risse beim Trocknen auftreten. Letztere resultieren insbesondere aus Gefügespannungen aufgrund inhomogener Verteilung grober Poren und Unverträglichkeit des Porosierungsmaterials mit den keramischen Eigenschaften des Tons, wie z.B. unterschiedliches Saugvermögen und Wasserrückhaltevermögen von Ton und Porosierungsmittel. Außerdem erreichen grobe Porosierungsmittel bereits ein Drittel der Scherbendicke bei dünnwandiger Hohlware und führen damit zu extremen Dichte- und Festigkeitsschwankungen im Makrobereich (bis 5 mm). Man hat auch schon versucht, kleine Poren durch Zusatz von Mehl oder Leichtmetallpulvern oder aus der Papierherstellung stammende Abfallschlämme herzustellen. Diese Versuche scheiterten entweder am zu hohen Ascheanteil der Porosierungsmittel (Mehl, Abfall der Papierherstellung) und/oder an einer unkontrollierbaren Schwindung und/oder zu Risse führenden Gefügespannungen und/oder an den Umweltproblemen, die mit diesen Porosierungsmitteln verbunden sind. Auch setzen der hohe Wasseranteil und der häufig nicht konstante Anfall von Abfallschlämmen dem wirtschaftlichen Einsatz Grenzen.

Aufgabe der Erfindung ist, einen Ziegel mit einer aufgrund einer Porosierung erzeugten Mikroporenstruktur mit homogen verteilten Mikroporen zu schaffen, der optimale Festigkeiten, Wärmedämmung und Schalldämmung gewährleistet. Aufgabe der Erfindung ist ferner, ein Verfahren aufzuzeigen, mit dem der Ziegel mit optimaler Maßhaltigkeit der geformten Produkte, d.h. mit äußerst geringer Schwindung beim Trocknen und Brennen hergestellt werden kann, so daß nur äußerst geringe Mengen an schwindungsbedingtem Bruchmaterial anfallen.

Die erstgenannte Aufgabe wird durch die Merkmale des Anspruchs 1 und die zweitgenannte Aufgabe durch die Merkmale des Anspruchs 6 gelöst. Vorteilhafte Weiterbildungen der Erfindung werden in den von diesen Ansprüchen abhängigen Unteransprüchen gekennzeichnet.

Nach der Erfindung wird durch Feinstmahlung zerkleinertes Papier zur Erzeugung der zusätzlichen Mikroporen verwendet, wobei die Zerkleinerung des Papiers soweit getrieben wird, daß das Papier nur noch aus Flocken besteht, die aus verfilzten Papierfasern aufgebaut sind. Die Papierflocken weisen eine Korngröße von 80% < 0,5 mm, vorzugsweise von 80% < 0,2 mm auf. Die Flocken sind agglomerierte, miteinander verfilzte Papierfasern, wobei die Fasern das primäre, aus dem Papier durch Mahlung entstandene Zerkleinerungsprodukt sind. Im erfindungsgemäß verwendeten Produkt liegen die Fasern hauptsächlich in Form von Flocken gruppiert vor, wobei jedoch auch ein erheblicher Anteil an Einzelfasern vorhanden ist. Da herstellungsbedingt ein Gemisch aus Flocken und Fasern erzeugt wird, wird im folgenden zur Kennzeichnung des erfindungsgemäß verwendeten Porosierungsmittels lediglich der Begriff Flocken verwendet.

Die Flocken bilden nach der Mischung mit Ton und Wasser im grünen, ungebrannten Produkt ein verfilztes Gerüst, ähnlich einem Verbundwerkstoff, in dem die mit Tonschlempe ummantelten Flocken und Fasern homogen verteilt sind und sich gegenseitig abstützen und in dem die Fasern unregelmäßig ineinandergreifend nach Art eines Filzes angeordnet sind. Diese Anordnung ergibt eine hohe Festigkeit der Rohlinge, so daß sie relativ bruchfest sind und gut gehandhabt werden können.

Wesentlich und überraschend ist, daß die Trockenschwindung der Rohlinge sehr gering ist und eine Porosierung erzeugt werden kann, die höher ist als das Volumen des Zugesetzten Flockenmaterial beträgt. Die Schwindung ist in Abhängigkeit von der Zusatzmenge an zerfasertem Papier sogar steuerbar.

Die geringe Schwindung von z.B. 0 bis 1% und die geringere Trockenempfindlichkeit beruhen offenbar auf der Eigenschaft der gemahlenen Papierfasern, beim Mischen mit Ton und Wasser viel Wasser zu binden bzw. zu adsorbieren und dieses gebundene Wasser beim Trocknen derart gleichmäßig und relativ langsam abzugeben, daß ein zonales Austrocknen der Rohlinge mit den bekannten Folgen der Rißbildung nicht auftritt und die Schwindung insgesamt reduziert wird, weil die Wasserabgabe letztlich erst beendet ist, wenn das verfilzte Gerüst eine ausreichende der Schwindung entgegenwirkende Stützfestigkeit erzeugt hat. Eine solche Wirkung war nicht zu erwarten. Vielmehr war zu erwarten, daß die hohe adsorptiv an die Fasern gebundene Wassermenge durch erhöhten Wasserdampfdruck zur Sprengung des Rohlings führen kann, weshalb die Verwendung von feinstgemahlenem Papier schon aus diesem Grunde nicht nahelag.

Die feinstgemahlenen Papierfasern quellen erheblich, wenn sie mit Wasser in Berührung kommen und nehmen in der Ton-Wassermischung entsprechend mehr Raum ein als die trockenen Flocken bzw. Fasern erfordern würden. Normalerweise müßten die Gefüge aus den tonummantelten gequollenen verfilzten Fasern bei der Wasserabgabe in sich zusammenfallen und die Schwindung erheblich erhöhen. Überraschenderweise tritt diese Schwindung jedoch - wie oben bereits beschrieben - nicht auf, weil offenbar die Fasern das Wasser beim Trocknen derart nachliefern, daß keine Inhomogenitäten auftreten. Die Fasern behalten relativ lange ihre gequollene Raumform und erhalten den in der gequollenen Form eingenommenen Raum nach dem Verdampfen des gesamten Wassers, weil möglicherweise die Ummantelung mit der Tonschlempe dann bereits eine derartige Eigenfestigkeit aufweist, daß das durch die gequollenen Fasern erzeugte Gerüst erhalten bleibt. Daß das im Vergleich zum Volumen der trockenen Fasern bzw. Flocken erhöhte Volumen der gequollenen Fasern im Ziegel ohne merkliche Schwindung beibehalten wird, ist ein Phänomen, das bisher unbekannt war. Die unter Verwendung der Flocken hergestellten Ziegelrohlinge vertragen sogar höhere Trocknungstemperaturen und kürzere Trocknungszeiten.

Die erfindungsgemäß verwendeten Flocken werden durch Aufmahlung von Altpapier mit geeigneten Mahlaggregaten z.B. mit Stiftmühlen gewonnen. Dabei entstehen sehr feine Papierfasern, die zu einem Sekundärprodukt in Form von Flocken agglomerieren und dabei in den Flocken verfilzen. Zur Herstellung der Flocken wird insbesondere nicht wiederverwertbares, minderwertes Altpapier aus Zeitungen verwendet, das in erheblichen Mengen zur Verfügung steht und in der Regel zu Ballen gepreßt entweder verbrannt oder deponiert wird. Insofern wird bei Verwendung des zermahlenen Altpapiers auch ein Beitrag zur sinnvollen Entsorgung geleistet, wobei die Papierfasern nicht nur zur Vermeidung der Schwindung und zur Porenbildung, sondern auch als in der Ziegelmasse homogen verteilter zusätzlicher Brennstoff bzw. Ausbrennstoff dienen, die nur einen geringen unbeachtlichen Ascheanteil hinterlassen.

Für die Zwecke der Erfindung geeignete Fasern sollten beispielsweise die folgenden Eigenschaften aufweisen:
- Fasergröße vorzugsweise kleiner 0,2 mm;
- Schüttgewicht ca. 150 bis 300 kg/cbm je nach Verdichtung
- Quellvermögen;
- Wasseradsorption i.d.R. mindestens die gleiche Masse an Wasser wie an Fasern, vorzugsweise jedoch doppelt soviel Wasser wie Fasermenge;
- Flockengröße kleiner 5 mm, bevorzugt jedoch kleiner 1 mm.

Die Flocken werden in Mengen bis 15 Gew.-% zur üblichen Ziegelrohmischung zugesetzt. Das Trocknen wird in 8 bis 40 Stunden z.B. bei 40 bis 160°C durchgeführt. Das Brennen erfolgt bei 900 bis 1100°C. Die gebrannten Ziegel weisen eine Scherbenroh-dichte von 1200 bis 1700 kg/m³ auf. Sie sind homogen mikroporös, wobei ein verfilztes, porenumgebendes Steggerüst vorliegt und zwar mit Porengrößen zwischen 20 und 2000 µm.

Vorteilhaft ist, daß bei großformatigen Ziegelsteinen eine Nachbehandlung der Formate entfallen kann. Die bekannten porosierten großformatigen Ziegelsteine müssen vor dem Brennen, gegebenenfalls auch nach dem Brennen, grundsätzlich auf Form geschliffen werden, damit genaue Abmessungen gewährleistet werden können. Durch die geringe Schwindung der erfindungsgemäßen Ziegelprodukte ist dies nicht mehr erforderlich.

Es konnte festgestellt werden, daß die erfindungsgemäßen Ziegel gegenüber solchen, die mit Sägemehl porosiert sind, mindestens eine 10% höhere Festigkeit aufweisen.

Die gemahlenen Papierfasern bzw. Flocken werden zweckmäßigerweise wie folgt in die Ziegelrohmischung eingebracht.
a) Vormischung mit Wasser bis zum Ende des Quellens, danach Zumischung zum Ton.
b) Mischung aller Rohstoffe gleichzeitig.

Mischung bis zur weitgehenden Auflösung der Flocken, so daß sich eine verfilzte Einzelfaserverteilung ergibt.

Die erfindungsgemäßen Ziegelprodukte sind durch die folgenden Eigenschaften gekennzeichnet:
- Scherbenrohdichte 1200 bis 1700 kg/m³;
- Festigkeit höher als bei Produkten ähnlicher Rohdichte mit Grobporosierung;
- Wasseraufnahme abhängig von der Größe und Mahlfeinheit des Papiers bzw. der Papierflocken;
- Frostbeständigkeit wie oben;
- Schalldämmung höher als bei grobporisierten Produkten gleicher Scherbenrohdichte;
- Wärmeleitfähigkeit geringer als bei Produkten gleicher Scherbenrohdichte.

## Patentansprüche

1. Porosierter Ziegel aus gebranntem Ton,
**gekennzeichnet** durch
eine durch Ausbrennen von Papierfasern aus zermahlenem Papier hergestellte, verfilzte Mikroporenstruktur und eine Porosität von 13 bis 40, insbesondere von 20 bis 30 Vol.-% sowie eine Rohdichte von 1200 bis 1700, insbesondere von 1250 bis 1500 kg/m³.

2. Ziegel nach Anspruch 1,
**gekennzeichnet** durch
eine Druckfestigkeit von 4 bis 25, insbesondere von 6 bis 12 N/mm².

3. Ziegel nach Anspruch 1 und/oder 2,
**gekennzeichnet** durch
eine Wärmedämmung von 0,13 bis 0,18, insbesondere von 0,16 bis 0,18 W/mK.

4. Ziegel nach einem oder mehreren der Ansprüche 1 bis 3,
**gekennzeichnet** durch
eine Porengrößenverteilung von 2000 bis 1, insbesondere von 2000 bis 20 µm.

5. Verfahren zur Herstellung von porosierten Ziegeln, insbesondere von Ziegeln nach einem oder mehreren der Ansprüche 1 bis 4, wobei eine übliche, mit einem Ausbrennstoff als Porosierungsmittel versetzte Tonmischung verwendet wird, aus der Ziegelrohlinge gepreßt werden, die Ziegelrohlinge getrocknet und anschließend gebrannt werden,
dadurch **gekennzeichnet**,
daß als Porosierungsmittel feinstgemahlenes Papier in Flocken- und/oder Faserform verwendet wird.

6. Verfahren nach Anspruch 5,
dadurch **gekennzeichnet**,
daß feinstgemahlene Papierfasern mit einer Korngröße von 80% < 500 µm, insbesondere von 80% < 200 µm verwendet werden.

7. Verfahren nach Anspruch 5 und/oder 6,
dadurch **gekennzeichnet**,
daß die feinstgemahlenen Papierfasern in einer Menge von 1 bis 10, insbesondere von 4 bis 8 Gew.-%, bezogen auf die Trockensubstanz der Rohmischung, verwendet werden.

8. Verfahren nach einem oder mehreren der Ansprüche 6 bis 7,
dadurch **gekennzeichnet**,
daß durch Wasserzusatz gequollene, feinstgemahlene Papierfasern verwendet werden.

9. Verfahren nach einem oder mehreren der Ansprüche 6 bis 8,
dadurch **gekennzeichnet**,
daß das Trocknen bei 20 bis 180°C, insbesondere bei 40°C bis 160°C, durchgeführt wird.

10. Verfahren nach einem oder mehreren der Ansprüche 6 bis 9,
dadurch **gekennzeichnet**,
daß das Brennen bei 900 bis 1100°C, insbesondere bei 1000 bis 1050°C, durchgeführt wird.

11. Verfahren nach einem oder mehreren der Ansprüche 6 bis 10,
dadurch **gekennzeichnet**,
daß die folgende Mischung zur Herstellung der Ziegel verwendet wird:
0 bis 5 Gew.-% Sägemehl
1 bis 15 Gew.-% Papierfasern
Rest Tonmischung (trocken).

12. Verfahren nach einem oder mehreren der Ansprüche 6 bis 11,
dadurch **gekennzeichnet**,
daß die feinstgemahlenen Papierfasern mit Wasser bis zum Ende des Quellens vorgemischt werden.

13. Verfahren nach einem oder mehreren der Ansprüche 6 bis 11,
dadurch **gekennzeichnet**,
daß die Mischung sämtlicher Rohstoffe gleichzeitig erfolgt.

14. Verfahren nach Anspruch 12 und/oder 13,
dadurch **gekennzeichnet**,
daß bis zur weitestgehenden Zerstörung der Flocken gemischt und eine verfilzte Faserverteilung gebildet wird.
